# EUROPÄISCHE PATENTANMELDUNG

(11) **EP 1 283 325 A1**
(43) Veröffentlichungstag der Anmeldung: **12.02.2003**
(21) Anmeldenummer: 01119248.1
(22) Anmeldetag: 09.08.2001
(51) Int. Cl.: F01D 5/18, B23K 20/02

(54) **Schaufel einer Strömungsmaschine und Verfahren zur Herstellung einer solchen Schaufel**

(71) Anmelder: SIEMENS AKTIENGESELLSCHAFT, 80333 München (DE)
(72) Erfinder: Pickert, Ursula, 45470 Mühlehim an der Ruhr (DE); Tiemann, Peter, 58452 Witten (DE)

(57) **Zusammenfassung**

Die Erfindung betrifft eine Schaufel (1) einer Strömungsmaschine (41) mit einem Grundkörper (2) aus einer Titanlegierung, der aus einem ersten und zweiten Teilstück (11,13) aufgebaut, die durch einen Bondingprozess in einem Verbindungsbereich (31) verbunden sind. Zur Verminderung einer lokalen Spannungskonzentration verläuft im Verbindungsbereich (31) eine Nut (23) mit einer Nutwand (27) derart, dass diese an das zweite Teilstück (13) unmittelbar angrenzt und dort mit diesem einen Verbindungswinkel (α) größer als 70 Grad bildet.

## Beschreibung

Die Erfindung betrifft eine Schaufel einer Strömungsmaschine mit einem Grundkörper aus einer Titanlegierung. Sie betrifft weiter ein Verfahren zur Herstellung einer solchen Schaufel.

Eine Laufschaufel eines Verdichters aus einer Titanlegierung ist aus der US 5,063,662 bekannt. Schaufeln auf Titan-Basis bieten den Vorteil erheblicher Gewichtsersparnis gegenüber z. B. Schaufeln aus Stahl. Allerdings sind Titanlegierungen kaum giessbar. Eine geschmiedete Schaufel kann nicht hohl ausgeführt werden, was die Gewichtsersparnis wieder aufzehrt. Eine Möglichkeit zur Herstellung einer solchen Schaufel ist das Bonden zweier Hälften. Dabei werden die Hälften bei hohem Druck und bei hoher Temperatur mit einander verbunden. Anschließend wird die Schaufel verdreht. Zur Formwahrung wird dem hohlen Schaufelinneren unter hohem Druck ein Gas zugeführt. Das Einbringen einer Gaszuführungsleitung in den Schaufelfuß einer Titanschaufel ist Gegenstand der US 5,448,829.

Der Erfindung liegt die Aufgabe zugrunde, eine Schaufel einer Strömungsmaschine anzugeben, bei der die Festigkeit eines Bonding-Verbindungsbereiches verbessert ist. Des Weiteren soll ein besonders geeignetes Herstellungsverfahren einer solchen Schaufel angegeben werden.

Bezüglich der Schaufel wird diese Aufgabe erfindungsgemäß gelöst durch die Merkmale des Anspruchs 1. Dazu weist die Schaufel einen Grundkörper aus einer Titanlegierung mit einem ersten Teilstück und einem zweiten Teilstück auf, wobei das erste Teilstück mit dem zweiten Teilstück in einem Verbindungsbereich durch eine Hochdruck- und Hochtemperaturverbindung aneinander gebondet sind, und wobei im Verbindungsbereich eine Nut im ersten Teilstück mit einer Nutwand derart verläuft, dass die Nutwand an das zweite Teilstück unmittelbar angrenzt und dort mit dem zweiten Teilstück einen Verbindungswinkel größer als 70 Grad bildet.

Der Erfindung liegt die Erkenntnis zugrunde, dass die Verbindung durch einen Bonding-Prozeß bei einer Schaufel zu Festigkeitsproblemen bei spitzen Winkeln führen kann. Gerade beim Bonden einer Schaufel aus zwei Hälften, die an der Anströmkante und an der Abströmkante miteinander verbunden werden, treten solche spitzen Winkel auf. Hierdurch kommt es zu einer lokal sehr hohen Spannungskonzentration, die zu einem Aufreißen der Verbindung führen kann.

Durch die im Verbindungsbereich angeordnete Nut wird der spitze Winkel, unter dem normalerweise das erste und das zweite Teilstück aufeinander treffen würden, auf einen Wert größer als 70 Grad geändert. Hierdurch wird die lokale Spannungskonzentration im Verbindungsbereich so weit gesenkt, dass die Gefahr eines Aufreißens der Verbindung zwischen dem ersten und dem zweiten Teilstück nicht mehr besteht.

Vorzugsweise umfasst die Titanlegierung Titanaluminid. Titanaluminid weist besonders günstige Eigenschaften hinsichtlich einer Hochtemperaturfestigkeit auf. Aber auch bei Titanaluminid besteht die Notwendigkeit eines Bondens bei der Herstellung der Schaufel. Durch die Verbesserung der Verbindungsfestigkeit im Bonding-Bereich mittels der Nut wird Titanaluminid auch für Anwendungen mit großen Festigkeitsanforderungen verfügbar.

In vorteilhafter Ausgestaltung verläuft die Nut entlang des gesamten Verbindungsbereiches. Denkbar ist zwar auch ein teilweises Einbringen der Nut in z.B. besonders mechanisch beanspruchten Bereichen. Es könnten auch mehrere Nuten vorgesehen werden. Fertigungstechnisch besonders einfach ist jedoch, eine einzige, sich entlang des gesamten Verbindungsbereiches erstreckende Nut vorzusehen.

In weiterer vorteilhafter Ausgestaltung verläuft im zweiten Teilstück der Nut gegenüberliegend eine Gegennut mit einer Gegennutwand derart, dass die Nutwand und die Gegennutwand bündig aneinandergrenzen und den Verbindungswinkel bilden. In dieser Ausgestaltung kann der Verbindungswinkel in einfacher Weise noch über 90 Grad vergrößert werden.

Der Verbindungswinkel kann mehr als 120 Grad, insbesondere mehr als 150 Grad betragen. Besonders vorteilhaft ist ein Verbindungswinkel von etwa 180 Grad, bei dem die Nutwand und die Gegennutwand unmittelbar am Nutrand rechtwinklig zur Oberfläche des ersten und zweiten Teilstückes orientiert sind.

Zweckmäßigerweise weist die Nut eine sich entlang der Nutrichtung ändernde Nuttiefe auf. Dabei bilden das erste Teilstück und das zweite Teilstück im Verbindungsbereich eine gemeinsame Wanddicke, die sich entlang des Verbindungsbereich ändert, wobei die Nuttiefe mit größerer Wanddicke tiefer wird. In dieser Ausgestaltung ist die Nut in ihrer Abmessung an die Wanddicke angepasst. Bei einer größeren Wanddicke wird es aufgrund der lokalen Spannungsverteilung im Verbindungsbereich nötig, die Nut tiefer auszuführen, um eine ausreichende Verschiebung der in dem Verbindungsbereich wirkenden Kräfte zu Winkeln größer als 70 Grad zu bewirken. Die Nuttiefe sollte sich dabei kontinuierlich mit der Wanddicke ändern.

Ist die Nut im Querschnitt etwa halbkreisförmig, so bildet sie dabei zweckmäßigerweise mit einer ebenfalls halbkreisförmigen Gegennut eine Ringnut. Der Durchmesser dieser Ringnut ändert sich entsprechend der Wanddicke im Verbindungsbereich. Bei größeren Wanddicken liegt ein größerer Durchmesser vor.

Das erste oder zweite Teilstück kann die Saugseite bilden, während dann das zweite bzw. erste Teilstück die Druckseite bildet.

Die Schaufel ist insbesondere für eine letzte Stufe einer Gasturbine als Gasturbinenlaufschaufel ausgeführt. Bei einer Gasturbinenschaufel bestehen besonders hohe Anforderungen an eine Hochtemperaturfestigkeit. Besonders bevorzugt weist die Gasturbinenschaufel dabei eine Schaufellänge größer als 60 cm auf. Bei solch großen Schaufeln kommt es zu einer sehr großen Fliehkraftbelastung. Gerade hier ist eine Gewichtsersparnis besonders vorteilhaft und damit eine Verwendung einer Titanlegierung für den Grundkörper. Wiederum aufgrund der besonders hohen mechanischen Belastung ist aber ein konventioneller Bonding-Prozess nicht ausreichend, um Teilstücke sicher miteinander zu verbinden. Erst mit der im Verbindungsbereich verlaufenden Nut ist es möglich, die Verbindung ausreichend sicher herzustellen.

Bezüglich des Verfahrens wird die Aufgabe erfindungsgemäß gelöst durch die Merkmale des Anspruchs 12. Dabei werden ein erstes Teilstück und ein zweites Teilstück eines Grundkörpers aus einer Titanlegierung in einem Verbindungsbereich aneinander gebondet, wobei vor dem Bonden im Verbindungsbereich eine Nut im ersten Teilstück mit einer Nutwand derart eingebracht wird, dass die Nutwand an das zweite Teilstück unmittelbar angrenzt und dort mit dem zweiten Teilstück einen Verbindungswinkel größer als 70 Grad bildet.

Nachfolgend werden Ausführungsbeispiele der Erfindung anhand einer Zeichnung näher erläutert. Darin zeigen: teilweise schematisch und nicht maßstäblich:
- FIG 1: eine Gasturbinenlaufschaufel in einer Seitenansicht,
- FIG 2: die Gasturbinenlaufschaufel gemäß FIG 1 in einer anderen Seitenansicht,
- FIG 3-9: Schnittdarstellungen entlang der Linien III-III, IV-IV, V-V, VI-VI, VII-VII, VIII-VIII bzw. IX-IX in FIG 2,
- FIG 10: einen vergrößerten Ausschnitt durch die Gasturbinenlaufschaufel gemäß FIG 1
- FIG 11: eine Gasturbine, und
- FIG 12: in einer Darstellung gemäß FIG 10 eine Schaufel gemäß dem Stand der Technik.

Einander entsprechende Teile sind in allen Figuren mit den gleichen Bezugszeichen versehen.

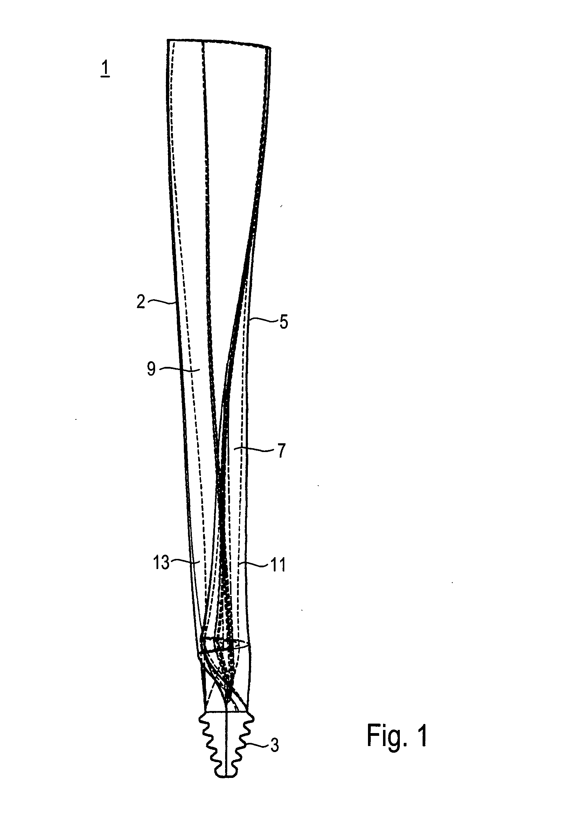

Figur 1 zeigt eine Ansicht einer Gasturbinenlaufschaufel 1, die aus einem Grundkörper 2 aus einer Titanaluminid-Legierung aufgebaut ist. Je nach Anwendung kann auf den Grundkörper 2 auch eine Schutzschicht aufgebracht sein, insbesondere eine Korrosionsschutzschicht. Die Gasturbinenlaufschaufel 1 weist einen Schaufelfuß 3 auf, der tannenbaumartig geformt ist um in nicht näher dargestellter Art und Weise in eine entsprechende Nut einer Radscheibe einzugreifen. An den Schaufelfuß 3 schließt sich ein Schaufelblatt 5 an, das eine Saugseite 7 und eine Druckseite 9 aufweist.

Die Gasturbinenlaufschaufel 1 ist aus einem ersten Teilstück 11 und einem zweiten Teilstück 13 gebildet. Das erste Teilstück 11 bildet die Saugseite 7. Das zweite Teilstück 13 bildet die Druckseite 9. Die beiden Teilstücke 11,13 sind miteinander durch einen Hochdruck- und Hochtemperaturbondingprozess verbunden.

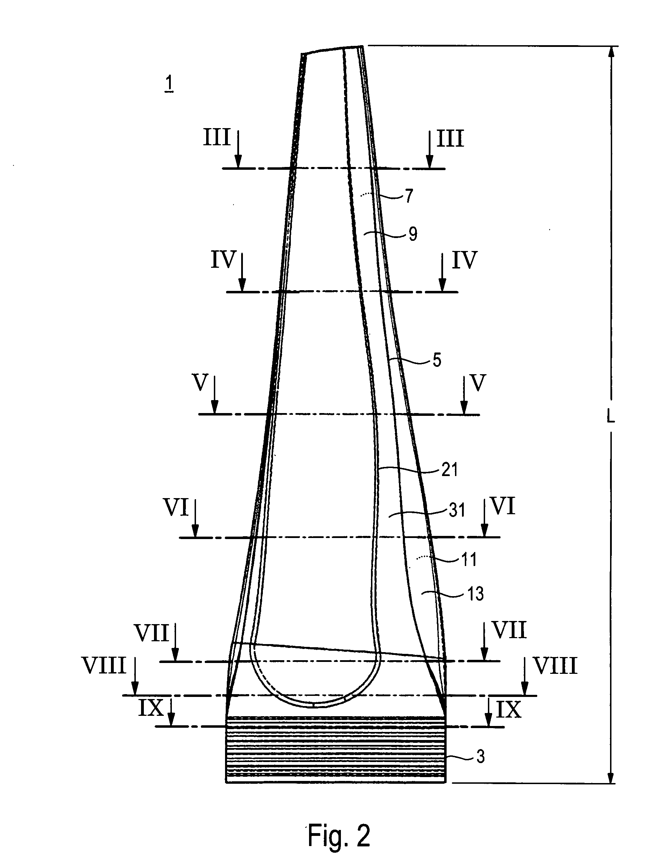

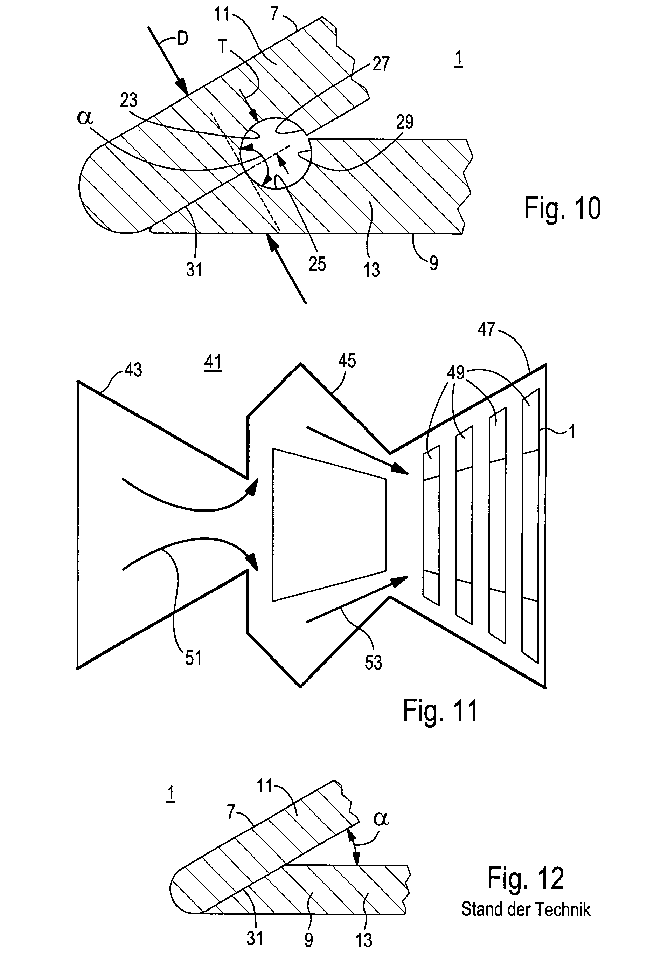

Figur 2 zeigt eine weitere Ansicht der Gasturbinenlaufschaufel 1. In einem Verbindungsbereich 31 (siehe auch Figur 10) sind die Teilstücke 11,13 miteinander durch den Bondingprozess verbunden. In dem Verbindungsbereich 31 verläuft eine Ringnut 21, durch den die Verbindung gegen ein Aufreißen gesichert wird.

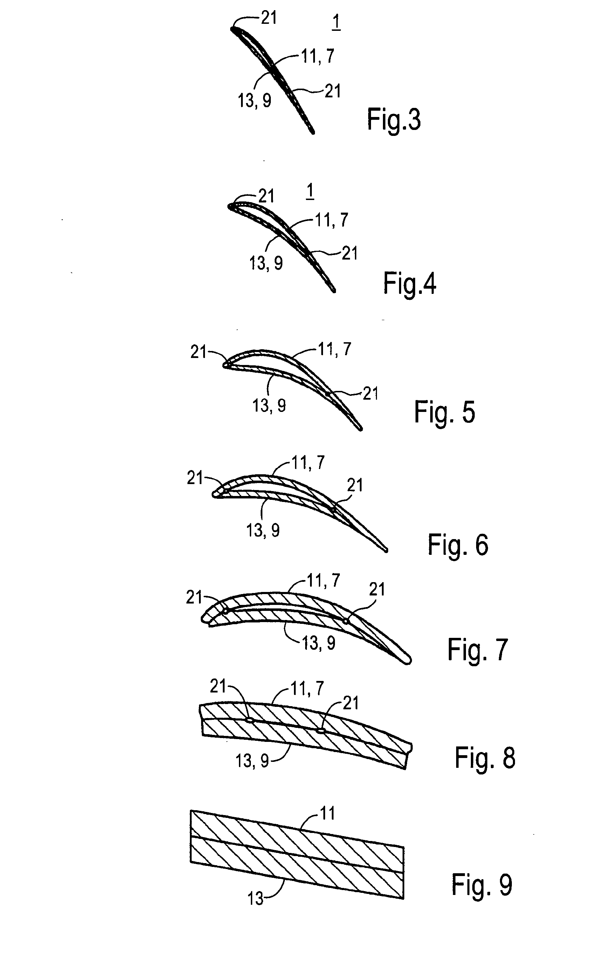

Die Figuren 3 bis 9 zeigen die in Figur 2 eingezeichneten Querschnitte. Man erkennt, dass die Wanddicke der Gasturbinenlaufschaufel 1 zum Schaufelfuß hin zunimmt. In entsprechender Weise nimmt auch der Durchmesser der Ringnut 21 zu. Die Teilstücke 11 und 13 schließen einen Hohlraum ein, der eine innere Kühlung mittels eines Kühlfluides ermöglichen kann. Weiterhin ist die Gasturbinenlaufschaufel 1 durch die hohle Ausführung und durch die Verwendung der Titanlegierung für den Grundkörper 2 vergleichsweise leicht. Dementsprechend kann sie auch groß ausgeführt werden. Die Schaufellänge L beträgt z. B. 940 cm.

Wie aus den Figuren 3 bis 9 ersichtlich ist, stoßen die Teilstücke 11 und 13 unter einem spitzen Winkel zusammen. Bei einer konventionellen Verbindung mittels eines Bondingprozesses könnte es unter den extremen Belastungen beim Einsatz in einer Gasturbine zu einem Aufreißen der Verbindung kommen, bedingt durch eine sehr hohe lokale Spannungskonzentration. Dies wird durch die Ringnut 21 verhindert, die den spitzen Verbindungswinkel vergrößert, wie im folgenden näher erläutert wird.

Figur 12 zeigt einen Bonding-Verbindungsbereich 31 an einer Schaufeleintrittskante gemäß dem Stand der Technik. Die Teilstücke 11 und 13 bilden mit ihren Innenseiten im Verbindungsbereich 31 einen Verbindungswinkel α. Der Verbindungswinkel α ist kleiner als 70 Grad. Hierdurch kommt es zu einer sehr hohen lokalen Spannungskonzentration an der Innenseite des Verbindungsbereiches 31, was wiederum zu einem Aufreißen der Verbindung führen kann.

In Figur 10 ist dargestellt, wie durch die Ringnut 21 die Verbindung zwischen den Teilstücken 11 und 13 verbessert wird. Die Ringnut 21 ist gebildet durch eine Nut 23 im ersten Teilstück 11 und durch eine der Nut 23 gegenüberliegende Gegennut 25 im zweiten Teilstück 13. Die Nut 23 ist - wie auch die Gegennut 25 - halbkreisförmig ausgeführt, so dass sich der kreis- oder ringförmige Querschnitt der Ringnut 21 ergibt. Die Nut 23 weist eine Nutwand 27 auf. Die Gegennut 25 weist eine Gegennutwand 29 auf. Die Nutwand 27 schließt mit der Gegennutwand 29 bündig ab. Durch die Nutwand 27 und die Gegennutwand 29 wird der Verbindungswinkel α zwischen dem ersten Teilstück 11 und dem zweiten Teilstück 13 auf etwa 180 Grad vergrößert. Hierdurch wird die lokale Spannungskonzentration und das Risiko des Aufreißens der Verbindung stark verringert. Die Nut 23 weist eine Nuttiefe T auf. Gemessen senkrecht zum Verbindungsbereich 31 und in dessen'Mitte weist die Gasturbinenschaufel 1 eine Wanddicke D auf, die durch die Wanddicken des ersten und zweiten Teilstückes 11, 13 gebildet ist. Die Nuttiefe T wächst in gleichem Maße wie die Wanddicke D entlang des Verbindungsbereiches 31.

Figur 11 zeigt eine Gasturbine 41 mit einem Verdichter 43, einer Brennkammer 45 und einem Turbinenteil 47. Luft 51 wird vom Verdichter 43 hoch verdichtet und der Brennkammer 45 zugeleitet. Dort wird sie mit Brennstoff zu einem Heißgas 53 verbrannt, welches in das Turbinenteil 47 strömt. Dort strömt es an Schaufelkränzen 49 vorbei und treibt damit die Gasturbine 41 an. Gerade im letzten Schaufelkranz 49 des Turbinenteils 47 sind große Laufschaufeln 1 angeordnet, da sich der Strömungskanal des Turbinenteils 47 konisch erweitert. Diese Laufschaufeln 1 sind besonders hohen Fliehkräften ausgesetzt und eine Gewichtsreduktion durch Verwendung einer Titanlegierung ist hier besonders vorteilhaft.

## Patentansprüche

1. Schaufel (1) einer Strömungsmaschine mit einem Grundkörper (2) aus einer Titanlegierung, der ein erstes Teilstück (11) und ein zweites Teilstück (13) aufweist, wobei das erste Teilstück (11) mit dem zweiten Teilstück (13) in einem Verbindungsbereich (31) durch eine Hochdruck- und Hochtemperaturverbindung aneinander gebondet sind, **dadurch gekennzeichnet, dass** im Verbindungsbereich (31) eine Nut (23) im ersten Teilstück (11) mit einer Nutwand (27) derart verläuft, dass die Nutwand (27) an das zweite Teilstück (13) unmittelbar angrenzt und dort mit dem zweiten Teilstück (13) einen Verbindungswinkel (α) größer als 70 Grad bildet.

2. Schaufel (1) nach Anspruch 1, bei der die Titanlegierung Titanaluminid ist.

3. Schaufel (1) nach Anspruch 1 oder 2, bei der die Nut (23) entlang des gesamten Verbindungsbereiches (31) verläuft.

4. Schaufel (1) nach Anspruch 1, 2 oder 3, bei der im zweiten Teilstück (13) der Nut (23) gegenüberliegend eine Gegennut (25) mit einer Gegennutwand (29) derart verläuft, dass die Nutwand (27) und die Gegennutwand (29) bündig aneinandergrenzen und den Verbindungswinkel (α) bilden.

5. Schaufel (1) nach einem der Ansprüche 1 bis 4, bei der der Verbindungswinkel (α) mehr als 120 Grad, insbesondere mehr als 150 Grad, beträgt.

6. Schaufel (1) nach einem der Ansprüche 1 bis 5, bei der die Nut (23) eine sich entlang der Nutrichtung ändernde Nuttiefe (T) aufweist.

7. Schaufel (1) nach Anspruch 6, bei der das erste Teilstück (11) und das zweite Teilstück (13) im Verbindungsbereich (31) eine gemeinsame Wanddicke (D) bilden, die sich entlang des Verbindungsbereich (31) ändert, wobei die Nuttiefe (T) mit größerer Wanddicke (D) tiefer wird.

8. Schaufel (1) nach einem der Ansprüche 1 bis 6, bei der die Nut (23) im Querschnitt etwa halbkreisförmig ist.

9. Schaufel (1) nach einem der Ansprüche 1 bis 8, bei der das erste Teilstück (11) die Saugseite und das zweite Teilstück (13) die Druckseite bildet.

10. Schaufel (1) nach einem der Ansprüche 1 bis 9, ausgeführt als Gasturbinenlaufschaufel, insbesondere für eine letzte Stufe einer Gasturbine (41).

11. Schaufel (1) nach einem der Ansprüche 1 bis 10, mit einer Schaufellänge (L) größer als 60 cm.

12. Verfahren zur Herstellung einer Schaufel (1) für eine Strömungsmaschine, mit einem Grundkörper (2) aus einer Titanlegierung, bei dem ein erstes Teilstück (11) und ein zweites Teilstück (13) in einem Verbindungsbereich (31) aneinander gebondet werden, **dadurch gekennzeichnet ,dass** vor dem Bonden im Verbindungsbereich (31) eine Nut (23) im ersten Teilstück (11) mit einer Nutwand (27) derart eingebracht wird, dass die Nutwand (27) an das zweite Teilstück (13) unmittelbar angrenzt und dort mit dem zweiten Teilstück (13) einen Verbindungswinkel (α) größer als 70 Grad bildet.
